# EUROPÄISCHE PATENTSCHRIFT

(11) **EP 1 911 315 B1**
(45) Veröffentlichungstag und Bekanntmachung des Hinweises auf die Patenterteilung: **28.11.2012**
(21) Anmeldenummer: 06764057.3
(22) Anmeldetag: 04.07.2006
(51) Int. Cl.: G01S 5/00, H04W 4/02

(54) **VERFAHREN ZUM LOKALISIEREN VON MOBILEN ENDGERÄTEN**
METHOD FOR LOCALISATION OF MOBILE TERMINALS
PROCEDE DE LOCALISATION DE TERMINAUX MOBILES

(30) Priorität: 29.07.2005 DE 102005035748
(43) Veröffentlichungstag der Anmeldung: 16.04.2008
(73) Patentinhaber: SIEMENS AKTIENGESELLSCHAFT, 80333 München (DE)
(72) Erfinder: BOZIONEK, Bruno, 33178 Borchen (DE)
(74) Vertreter: Fritzsche, Thomas
(86) Internationale Anmeldenummer: PCT/EP2006/063861
(87) Internationale Veröffentlichungsnummer: WO 2007/012549

(56) Entgegenhaltungen:
- EP-A- 1 365 612
- EP-A- 1 418 784
- US-A- 6 134 446

## Beschreibung

In Location/Position Based Applications, z.B. Konferenzsteuerung oder Kommunikationssteuerung für Hotels, ist für zugehörige oder zugeordnete mobile Endgeräte deren geographische Position zu ermitteln. Hierzu sind die mobilen Endgeräte in zunehmendem Maße mit Funktionen ausgestattet, mit deren Hilfe sie ihre geographische Position ermitteln können. Beispielsweise sind in den mobilen Endgräten GPS-Empfänger integriert mit deren Hilfe die geographische Position bestimmt werden kann. Auch andere Verfahren, z.B. aus der Messung der Pegel von unterschiedlichen Sendestationen die Position des jeweiligen mobilen Endgerätes zu ermitteln, werden eingesetzt. All diese Verfahren bzw. Funktionen werden durch Anfragen an das jeweilige mobile Endgerät angestoßen bzw. wird deren Position bzw. Positionsinformation abgefragt. Diese Anfragen bzw. Abfragen werden üblicherweise von einer zentralen Einrichtung durchgeführt, in der die Location Based Applications realisiert sind.

Die Anfragen erfolgen hierbei kontinuierlich, d.h. in einem vorgegebenen Zeitraster. Um die geographische Position von mobilen Endgeräten erfassen zu können, die sich bewegen und insbesondere schneller bewegen, sind kontinuierliche Anfrage in kurzen Zeitabständen, bzw. in kleinerem Zeitraster erforderlich. Dies führt insbesondere bei mehreren anzufragenden mobilen Endgeräten zu einer erhöhten Übertragung von Information, wobei die Übertragungssysteme und die die Information verarbeitenden Komponenten der zentralen Einrichtung erheblich dynamisch belastet und auch überlastet werden.

Bei dem in EP 1 365 612 A1 beschriebenen Verfahren zur Mobilitätssteuerung in einem Kommunikationssystem wird zur besseren Verwaltung der Netzressourcen über eine Verbindung zwischen einer ersten, teilnehmerseitigen Station und einer zweiten netzseitigen Zugangsstation eine Mobilitätsinformation bezüglich der tatsächlichen oder maximal möglichen Mobilität der ersten Station zu übertragen. Als die Mobilitätsinformation wird insbesondere eine Information über eine zulässige und/oder tatsächliche räumliche Begrenzung der Mobilität der ersten Station übertragen, insbesondere eine Information über eine Begrenzung auf einen ortsfesten Betrieb.

Das in EP 1 418 784 A1 beschriebene Verfahren bezieht sich auf ein bewegliches Gerät, das seine gegenwärtige Position innerhalb eines drahtlosen Kommunikationssystems bestimmen kann. Das bewegliche Gerät erzeugt periodisch eine Schätzung seines aktuellen Orts oder seiner aktuellen Mobilität und überwacht dann Kanäle zur Kanalauswahl hierauf basierend, um ein "frame stealing" im aktiven Modus zu minimieren und um Energie im Leerlaufmodus zu sparen. Die gleiche Information ist auch für die Bestimmung nützlich, welche Zellen zu überwachen sind, und für die Steuerung, wie häufig Schätzungen von Positionen oder Positionsänderungen durchgeführt werden.

In US 6,134,446 ist ein Verfahren beschrieben, bei dem ein Mobilitätsprozessor an ein Teilnehmergerät Ortsaktualisierungsparameter übermittelt, die Bedingungen anzeigen, nach denen das Teilnehmergerät seine Ortsinformation zum Mobilitätsprozessor zu übermitteln hat. Anhand der Ortsinformation stellt der Mobilitätsprozessor fest, ob das Teilnehmergerät die Ortsinformation konsistent zu den Ortsaktualisierungsparametern übermittelt hat. Wenn der Mobilitätsprozessor feststellt, dass die übermittelte Ortsinformation nicht konsistent zu den Ortsaktualisierungsparametern ist, erzeugt der Mobilitätsprozessor einen neuen Satz an Ortsaktualisierungsparametern, die dem Teilnehmergerät übermittelt werden.

Die der Erfindung zugrunde liegende Aufgabe besteht darin, eine vielseitig einsetzbare geographische Lokalisierung von mobilen Endgeräten mit verringerter Belastung der Übertragungssysteme bereitzustellen. Die Aufgabe wird durch die Merkmale der Ansprüche 1 und 2 sowie 14 und 15 gelöst.

Ein wesentlicher Vorteil der erfindungsgemäßen Verfahren besteht darin, dass die Anfragen bei mobilen Endgeräten, die sich nicht oder mit geringer Geschwindigkeit bewegen, in großen Zeitabständen erfolgen kann und damit die drahtlosen Übertragungssysteme und die die Position bzw. Positionsinformation verarbeitenden Komponenten einer zentralen Einrichtung erheblich dynamisch entlastet werden. Dieser Entlastungseffekt wird dadurch verstärkt, dass die meisten Endgeräte sich mit geringer Geschwindigkeit bewegen. Ein weiterer Vorteil bei den erfindungsgemäßen Verfahren besteht darin, dass die Bewegungsgeschwindigkeit der mobilen Endgeräte ermittelt wird und diese Information zusätzlich zu der Position der Endgeräte den Location Based Applications bereitgestellt werden kann. Applikationen, bei der diese zusätzliche Information vorteilhaft ist, sind beispielsweise Applikationen, in die Roaming-Funktionen einbezogen sind.

Vorteilhafte Weiterbildungen der erfindungsgemäßen Verfahren sind den abhängigen Patentansprüchen zu entnehmen.

Im Folgenden wird die Erfindung anhand von zwei zeichnerischen Darstellungen näher erläutert. Dabei zeigen
- Figur 1: eine Topologie, in der die Erfindung realisiert ist, und
- Figur 2: ein das erfindungsgemäße Verfahren erläuterndes Ablaufdiagramm zu der in Figur 1 realisierten Topologie.

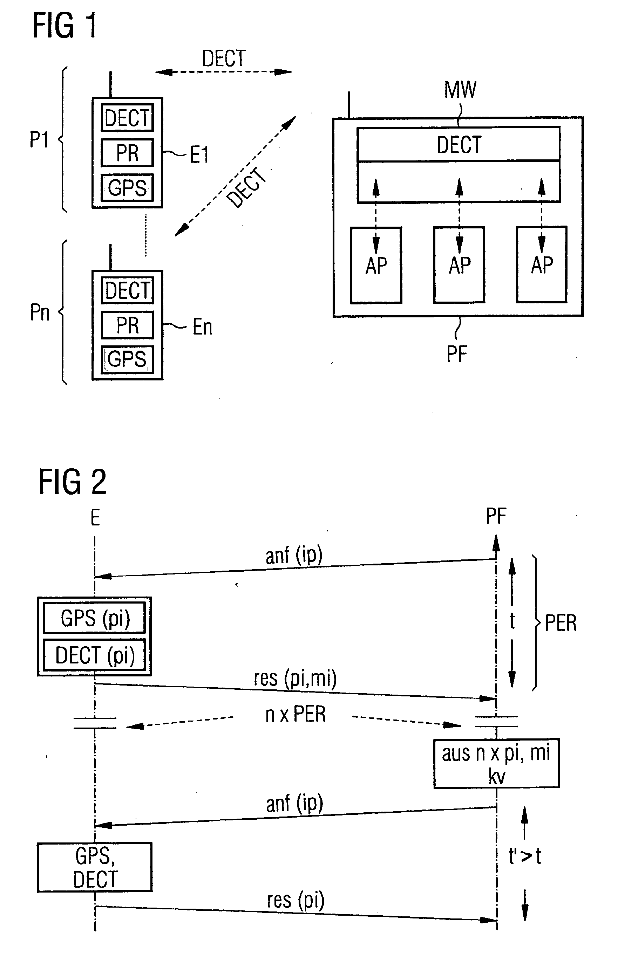

Figur 1 zeigt eine Kommunikationsplattform PF, in der Applikationen AP für die dargestellten Endgeräte E1..En realisiert sind. Für das Ausführungsbeispiel sei angenommen, dass für die Applikationen AP der Aufenthaltsort bzw. die geographische Position P1..Pn der Endgeräte E1..En bzw. der Benutzer der Endgeräte E1..En nach den erfindungsgemäßen Verfahren zu ermitteln ist. Derartige Applikationen AP sind beispielsweise eine Konferenz-Applikation oder eine Applikation AP für die Kommunikation in Hotels oder eine Applikation, die für die Behandlung von Notsituation vorgesehen ist. Die Plattform PF ist beispielsweise als Server ausgestaltet, wobei ein derartiger Server meist durch ein Computersystem oder einen Personalcomputer realisiert ist.

Die Endgeräte E1..En stellen beispielsweise schnurlose Endgeräte dar, die hinsichtlich Funkschnittstelle und Übertragungsprotokoll gemäß dem DECT-Verfahren ausgestaltet sind.

Alternativ sind andere drahtlose oder Mobilfunk-Verfahren beispielsweise gemäß einem Wireless LAN - Verfahren oder einem Bluetooth-Verfahren oder einem GPRS-Verfahren oder einem UMTS-Verfahren möglich. Auch können die mobilen Endgeräte E1..En drahtgebunden an die Plattform über ein nicht dargestelltes Kommunikationsnetz angebunden sein, wobei die Kommunikationsnetze paketorientiert oder zeitmultiplexorientiert ausgestaltet sein können - nicht dargestellt.

Für den Anschluss der Endgeräte E1..En ist beim Ausführungsbeispiel in der Plattform PF eine Middleware MW vorgesehen, durch die die physikalischen und protokollarischen Eigenschaften entsprechend der vorgesehenen Endgeräte E1..En realisiert ist. Bei den ausführungsbeispielgemäßen Endgeräten E1..En gemäß dem DECT-Verfahren ist durch die Middleware MW die physikalische und protokollarische DECT-Schnittstelle realisiert - in der Figur 1 durch die Bezeichnung DECT angedeutet. Entsprechend ist bei anderen mobilen Endgeräten E1..En die Middleware auszugestalten.

Für das erfindungsgemäße Verfahren sei im Ausführungsbeispiel angenommen, dass zur Bestimmung der geographischen Position P1..Pn der Endgeräte E1..En in diesen eine GPS-Funktion GPS (Global Positioning System) eingesetzt wird - in Figur 1 durch die Bezeichnung GPS angedeutet. Hierbei ist ein GPS-Empfänger vorgesehen, mit dessen Hilfe die Position P1..Pn der Endgeräte E1..En koordinatensystemgemäß ermittelt werden. Durch die durch die GPS-Funktion GPS ermittelte Positionsinformation pi ist die Position P1..Pn der Endgeräte E1..En eindeutig bestimmt.

Alternativ können für die Bestimmung der Position P1..Pn der Endgeräte E1..En Pegelmessungen der empfangenen Funksignale - nicht dargestellt - durchgeführt werden. Vorteilhaft werden die Pegel von Funksignalen zweier Funksender gemessen, da hierbei aus den bekannten Standorten der Funksender und der Pegelhöhe der empfangenen Funksignale die geographische Position P1..Pn der Endgeräte E1..En ermittelt werden kann. Bei drahtgebundenen, mobilen Endgeräten E1..En kann die Position P1..Pn der mobilen Endgeräte E1..En dadurch ermittelt werden, dass festgestellt wird, an welchem Netzanschluss, dessen Position bekannt ist, das jeweilige mobile Endgerät E1..En aktuell angeschlossen ist - in der Figur 1 nicht dargestellt. Ist das Endgerät E1..En über ein Kommunikationsnetz an die Plattform PF angeschlossen, kann dessen Position P1..Pn mit Hilfe der Kommunikationsnetzkomponenten wie beispielsweise Vermittlungseinrichtung oder Gatekeeper ermittelt und die hierbei gebildete Positionsinformation pi an die Plattform PF weitergeleitet werden, wobei die Position P1..Pn der Endgeräte E1..En durch die Plattform PF bei den Kommunikationsnetzkomponenten abgefragt wird. Bei direktem Anschluss der Endgeräte E1..En an die Plattform PF ist die Position P1..Pn der Endgeräte E1..En durch die Plattform PF selbst zu bestimmen.

Das in Figur 2 anhand eines Ablaufdiagramms erläuterte erfindungsgemäße Verfahren ist in der Middleware MW der Plattform PF und in den Endgeräten E1..En überwiegend programmtechnisch realisiert, wobei in den Endgeräten E1..En hierfür eine Positionsroutine PR vorgesehen ist.

In dem in Figur 2 dargestellten Ablaufdiagramm ist ein Endgerät E und die Plattform PF jeweils durch eine strichpunktierte Linie angedeutet, wobei durch das Endgerät E irgend eines der Endgeräte E1..En repräsentiert ist.

Wie bereits erläutert, ist für bestimmte Applikation AP eine aktuelle bzw. aktualisierte Bestimmung der geographischen Position P1..Pn der mobilen Endgeräte E1..En erforderlich. Hierzu wird von der Plattform PF eine Anfrage anf an das betroffene Endgerät E übermittelt, wobei in der Anfrage anf eine Information ip enthalten ist, die dem betroffenen Endgerät E anzeigt, dass es seine aktuelle Position P1..Pn ermitteln und eine Positionsinformation pi bilden soll. Nach Empfang der Anfrage anf im betroffenen Endgerät E ermittelt dieses gemäß dem Ausführungsbeispiel seine geographische Position P1..Pn mit Hilfe der GPS-Funktion GPS. Die so ermittelte Positionsinformation pi wird über die DECT-Funktion DECT - in der Figur 1 und 2 durch die Bezeichnung DECT angedeutet - durch eine Antwort res drahtlos zur Plattform PF übertragen bzw. übermittelt.

Die Ermittlung der Position P1..Pn des betroffenen Endgeräts E oder der betroffenen Endgeräte E - in Figur 2 durch die Bezeichnung PER angedeutet - wird mehrmals durchgeführt - in der Figur 2 durch die Bezeichnung n x PER angedeutet, wobei diese ersten Anfragen anf in regelmäßigen, d.h. in gleichen Zeitabständen t oder auch unregelmäßig durchgeführt werden können. In der Plattform PF wird anhand der n übermittelten Positionsinformationen pi die Bewegungsgeschwindigkeit kv des betroffenen Endgeräts E ermittelt bzw. berechnet. In die Berechnung ist der Zeitabstand t der einzelnen Anfragen anf und die Positionsinformation pi einbezogen. Je nach Höhe der ermittelten Bewegungsgeschwindigkeit kv des betroffenen Endgeräts E wird erfindungsgemäß die Häufigkeit der weiteren Anfragen anf an das betroffene mobile Endgerät E gesteuert. Dies bedeutet, dass bei einer hohen Bewegungsgeschwindigkeit kv des betroffenen mobilen Endgeräts E an dieses häufiger Anfragen anf, d.h. in geringeren Zeitabständen t' - initialisiert werden als bei einer niedrigeren Bewegungsgeschwindigkeit kv des betroffenen mobilen Endgeräts E. Für das Ausführungsbeispiel sei angenommen, dass das betroffene mobile Endgerät E eine niedrige Bewegungsgeschwindigkeit kv aufweist und daher die Zeitabstände t' der folgenden Anfragen anf größer gegenüber den ersten Zeitabständen t ist - in der Figur 2 die Bezeichnung t' > t angedeutet. Da die Bewegungsgeschwindigkeit kv der betroffenen Endgeräte E nach jeder Anfrage anf erneut ermittelt werden kann, kann die Häufigkeit der Anfragen anf kontinuierlich angepasst werden.

Bei einer nicht dargestellten alternativen Ausgestaltung der Erfindung wird die Position P1..Pn der betroffenen Endgeräte E nicht direkt in den Endgeräten E ermittelt, sondern es werden die vorhergehend bereits erläuterten Pegelmessungen von Funksignalen durchgeführt und die gemessenen Pegel als Messinformation mi an die Plattform PF übermittelt - in Figur 2 durch die Bezeichnung mi angedeutet. In dieser werden anhand der übermittelten Pegel sowohl die Position P1..Pn als auch die Bewegungsgeschwindigkeit kv der betroffenen Endgeräte E ermittelt bzw. berechnet, wobei aus der Höhe des gemessenen Pegels eine Distanz zu dem jeweiligen Funksender ermittelt wird.

Die Steuerung der Häufigkeit der Anfragen anf ist vorteilhaft, da insbesondere bei einer niedrigen Bewegungsgeschwindigkeit kv der betroffenen mobilen Endgeräte E die Häufigkeit der Anfragen anf auf ein Minimum reduziert werden können und somit der Kommunikationsaustausch zwischen den betroffenen mobilen Endgeräten E und der Plattform PF erheblich reduziert wird. Hierdurch wird eine erhebliche dynamische Entlastung sowohl der mobilen Endgeräte E als auch der Plattform PF erreicht und folglich können die meist knappen Ressourcen in den mobilen Endgeräten E und in der Plattform PF effektiver genutzt werden bzw. die freiwerdenden Ressourcen sind für die weiteren Anwendungen bzw. Applikationen AP verfügbar.

Die erfindungsgemäßen Verfahren sind nicht auf das Ausführungsbeispiel begrenzt, sondern können in allen Systemen eingesetzt werden, bei denen die Erfassung der Position der Endgeräte zu aktualisieren ist, um mit dieser aktualisierten Position weitere Aktionen im Rahmen von Applikationen oder Funktionen zu beeinflussen bzw. zu steuern.

## Patentansprüche

1. Verfahren zum Lokalisieren zumindest eines mobilen Endgerätes (E1..En),
- bei dem durch einzelne Anfragen (anf) an das mobile Endgerät (E1..En) dieses mehrmals jeweils seine geographische Position (P1..Pn) ermittelt und eine Positionsinformation (pi) übermittelt, wobei die Anfragen (anf) in gleichen oder unregelmäßigen Zeitabständen (t) durchgeführt werden, **dadurch gekennzeichnet, dass**
- bei dem aus der übermittelten Positionsinformation (pi) die Bewegungsgeschwindigkeit (kv) des mobilen Endgerätes (E1..En) berechnet wird, wobei der Zeitabstand (t) und die Positionsinformation (pi) in das Berechnen einbezogen werden, und
- bei dem in Abhängigkeit von der ermittelten Bewegungsgeschwindigkeit (kv) des mobilen Endgeräts die Häufigkeit der Anfragen (anf) gesteuert wird.

2. Verfahren zum Lokalisieren zumindest eines mobilen Endgerätes (E1..En),
- bei dem durch einzelne Anfragen (anf) an das mobile Endgerät (E1..En) dieses mehrmals jeweils eine Messinformation (mi) zur Bestimmung seiner geographische Position (P1..Pn) ermittelt und die Messinformation (mi) übermittelt, wobei die Anfragen (anf) in gleichen oder unregelmäßigen Zeitabständen (t) durchgeführt werden, **dadurch gekennzeichnet, dass**
- bei dem aus den übermittelten Messinformationen (mi) die Position (P1..Pn) des mobilen Endgeräts (E1..En) sowie die Bewegungsgeschwindigkeit (kv) des mobilen Endgerätes (E1..En) berechnet wird, wobei der Zeitabstand (t) und die Positionsinformation (pi) in das Berechnen der Bewegungsgeschwindigkeit einbezogen werden, und
- bei dem in Abhängigkeit von der ermittelten Bewegungsgeschwindigkeit (kv) des mobilen Endgeräts die Häufigkeit der Anfragen (anf) gesteuert wird.

3. Verfahren nach Anspruch 1 oder 2, **dadurch gekennzeichnet, dass** die Anfragen (anf) an das mobile Endgerät (E1..En) von einer Kommunikationsplattform (KF) gesteuert werden, und die Position (P1..Pn) und/oder die Bewegungsgeschwindigkeit (kv) in der Kommunikationsplattform (KF) aus den im Rahmen der Anfragen (anf) übermittelten Messinformationen oder Positionsinformationen (pi) für das jeweilige Endgerät (E1..En) ermittelt wird.

4. Verfahren nach einem der Anspruche 1 bis 3, **dadurch gekennzeichnet,**
**dass** die Häufigkeit der Anfragen (anf) bei steigender Bewegungsgeschwindigkeit (kv) erhöht und bei fallender Bewegungsgeschwindigkeit (kv) reduziert wird.

5. Verfahren nach einem der Ansprüche 1 bis 4, **dadurch gekennzeichnet,**
**dass** die Häufigkeit der Anfragen (anf) zusätzlich in Abhängigkeit von einer die Position (P1..Pn) des mobilen Endgeräts (E1..En) einbeziehende Applikation (AP) gesteuert wird.

6. Verfahren nach einem der vorhergehenden Ansprüche, **dadurch gekennzeichnet,**
**dass** die Position (P1..Pn) des mobilen Endgerätes (E1..En) mit Hilfe einer GPS- Funktion (GPS) ermittelt wird.

7. Verfahren nach einem der vorhergehenden Ansprüche, **dadurch gekennzeichnet,**
**dass** im mobilen Endgerät (E1..En) die Messinformation (mi) durch Pegelmessung eines von zumindest einem Sender empfangenen Signals ermittelt wird.

8. Verfahren nach einem der vorhergehenden Ansprüche, **dadurch gekennzeichnet,**
**dass** für drahtgebundene mobile Endgeräte (E1..En) die Messinformation (mi) durch eine Kommunikationsnetzinformation repräsentiert ist, wobei die Kommunikationsnetzinformation den Anschluss angibt, an die das mobile Endgerät (E1..En) aktuell angeschlossen ist.

9. Verfahren nach dem vorhergehenden Anspruch, **dadurch gekennzeichnet,**
**dass** die Position (P1..Pn) des mobilen Endgerätes (E1..En) dadurch ermittelt wird, dass festgestellt wird, an welchem Netzanschluss, dessen Position bekannt ist, das jeweilige mobile Endgerät (E1..En) angeschlossen ist.

10. Verfahren nach dem vorhergehenden Anspruch, **dadurch gekennzeichnet,**
**dass** das Endgerät (E1..En) über ein Kommunikationsnetz an eine Plattform (PF) angeschlossen wird, dessen Position (P1..Pn) mit Hilfe einer Kommunikationsnetzkomponente ermittelt wird und die hierbei gebildete Positionsinformation (pi) an die Plattform (PF) weitergeleitet wird, und die Position (P1..Pn) des Endgerätes (E1..En) durch die Plattform (PF) bei der Kommunikationsnetzkomponente abgefragt wird.

11. Verfahren nach dem vorhergehenden Anspruch, **dadurch gekennzeichnet,**
**dass** die Kommunikationsnetzkomponente als eine Vermittlungseinrichtung oder als ein Gatekeeper ausgebildet wird.

12. Verfahren nach einem der Ansprüche 8 oder 9, **dadurch gekennzeichnet,**
**dass** das Endgerät (E1..En) direkt an einer Plattform (PF) angeschlossen wird und die Position (P1..Pn) des Endgerätes (E1..En) durch die Plattform (PF) bestimmt wird.

13. Verfahren nach einem der vorhergehenden Ansprüche, **dadurch gekennzeichnet,**
**dass** die Anfragen (anf) an mobile DECT-, Wireless LAN-, UMTS-, oder GPRS-, oder PDA- Endgeräte (E1..En) gesteuert werden.

14. Kommunikationsplattform für eine Zusammenarbeit mit mobilen Endgeräten (E1..En) zum Lokalisieren zumindest eines mobilen Endgerätes (E1..En),
- mit Mitteln zum Übermitteln von einzelnen Anfragen (anf) an das mobile Endgerät (E1..En) für die mehrmalige Ermittlung seiner geographischen Position (P1..Pn) und zum Übermitteln einer Positionsinformation (pi), wobei die Anfragen (anf) in gleichen oder unregelmäßigen Zeitabständen (t) durchgeführt sind, **gekennzeichnet durch**
- Mittel zum Berechnen der Bewegungsgeschwindigkeit (kv) aus den übermittelten Positionsinformationen (pi) des mobilen Endgerätes (E1..En), wobei der Zeitabstand (t) und die Positionsinformation (pi) in das Berechnen einbezogen sind, und
- Mittel zum Steuern der Häufigkeit der Anfragen (anf) in Abhängigkeit von der ermittelten Bewegungsgeschwindigkeit (kv) des mobilen Endgeräts (E1..En).

15. Kommunikationsplattform für eine Zusammenarbeit mit mobilen Endgeräten (E1..En) zum Lokalisieren zumindest eines mobilen Endgerätes (E1..En),
- mit Mitteln zum Übermitteln von einzelnen Anfragen (anf) an das mobile Endgerät (E1..En) für die mehrmalige Ermittlung einer Messinformation (mi) zur Bestimmung seiner geographischen Position (P1..Pn) und zum Übermitteln der Messinformation (mi), wobei die Anfragen (anf) in gleichen oder unregelmäßigen Zeitabständen (t) durchgeführt sind, **gekennzeichnet durch**
- Mittel zum Berechnen der Position (P1..Pn) und der Bewegungsgeschwindigkeit (kv) des mobilen Endgerätes (E1..En) aus den übermittelten Messinformationen (mi), wobei der Zeitabstand (t) und die Positionsinformation (pi) in das Berechnen der Bewegungsgeschwindigkeit einbezogen sind, und
- Mittel zum Steuern der Häufigkeit der Anfragen (anf) in Abhängigkeit von der ermittelten Bewegungsgeschwindigkeit (kv) des mobilen Endgeräts (E1..En).

## Claims

1. A method for localising at least one mobile terminal (E1..En),
- in which, through individual enquiries (anf) to the mobile terminal (E1..En), the latter determines its geographical position (P1..Pn) several times and transmits a positional information (pi), with the enquiries (anf) being carried out at regular or irregular intervals (t), wherein
- in which *[sic]* the speed of displacement (kv) of the mobile terminal (E1..En) is calculated from the transmitted positional information (pi), with the interval (t) and the positional information (pi) being incorporated in the calculation, and
- in which *[sic]* the frequency of the enquiries (anf) is controlled as a function of the calculated speed of displacement (kv) of the mobile terminal.

2. A method for localising at least one mobile terminal (E1..En),
- in which, through individual enquiries (anf) to the mobile terminal (E1..En), the latter calculates a measured information (mi) for determining its geographical position (P1..Pn) several times and transmits the measured information (mi), with the enquiries (anf) being carried out at regular or irregular intervals (t), wherein
- in which *[sic]* the position (P1..Pn) of the mobile terminal (E1..En) and the speed of displacement (kv) of the mobile terminal (E1..En) is *[sic]* calculated from the transmitted measured information (mi), with the interval (t) and the positional information (pi) being incorporated into the calculation of the speed of displacement, and
- in which *[sic]* the frequency of the enquiries (anf) is controlled as a function of the calculated speed of displacement (kv) of the mobile terminal.

3. A method according to claim 1 or 2 wherein the enquiries (anf) to the mobile terminal (E1..En) are controlled by a communication platform (KF) and the position (P1..Pn) and/or speed of displacement (kv) is determined in the communication platform (KF) for the respective terminal (E1..En) from the measured information or positional information (pi) transmitted within the scope of the enquiries (anf).

4. A method according to any one of claims 1 to 3 wherein the frequency of the enquiries (anf) is increased as the speed of displacement (kv) rises and reduced as the speed of displacement (kv) falls.

5. A method according to any one of claims 1 to 4 wherein the frequency of the enquiries (anf) is additional controlled by an application (AP) incorporating the position (P1..Pn) of the mobile terminal (E1..En).

6. A method according to any one of the preceding claims wherein the position (P1..Pn) of the mobile terminal (E1..En) is determined with the aid of a GPS function (GPS).

7. A method according to any one of the preceding claims wherein the measured information (mi) is determined in the mobile terminal (E1..En) by measuring the level of a signal received from at least one transmitter.

8. A method according to any one of the preceding claims wherein for wired mobile terminals (E1..En) the measured information (mi) is represented by a communication network information which indicates the connection to which the mobile terminal (E1..En) is currently connected.

9. A method according to any one of the preceding claim wherein the position (P1..Pn) of the mobile terminal (E1..En) is determined by ascertaining the network connection, whose position is known, to which the respective mobile terminal (E1..En) is connected.

10. A method according to claim 9 wherein the terminal (E1..En) is connected by a communication network to a platform (PF) whose position (P1..Pn) is determined with the aid of a communication network component and the positional information (pi) which is formed in the process is sent to the platform (PF) which queries the position (P1..Pn) of the terminal (E1..En) with the communication network component.

11. A method according to claim 9 wherein the communication network component is configured as a switching device or as a gatekeeper.

12. A method according to either of claims 8 or 9 wherein the terminal (E1..En) is connected directly to a platform (PF) and the position (P1..Pn) of the terminal (E1..En) is determined by the platform (PF).

13. A method according to any one of the preceding claims wherein the enquiries (anf) are sent to mobile DECT, Wireless LAN, UMTS, or GPRS, or PDA terminals (E1..En).

14. A communication platform for working together with mobile terminals (E1..En) for localising at least one mobile terminal (E1..En),
- having means to transmit individual enquiries (anf) to the mobile terminal (E1..En) for the multiple determining of its geographical position (P1..Pn) and for transmitting positional information (pi), with the enquiries (anf) being carried out at regular or irregular intervals (t), **characterised by**
- means for calculating the speed of displacement (kv) from the transmitted positional information (pi) of the mobile terminal (E1..En), with the interval (t) and the positional information (pi) being incorporated in the calculation, and
- means for controlling the frequency of the enquiries (anf) as a function of the determined speed of displacement (kv) of the mobile terminal (E1..En).

15. A communication platform for working together with mobile terminals (E1..En) for localising at least one mobile terminal (E1..En),
- having means for transmitting individual enquiries (anf) to the mobile terminal (E1..En) for the multiple determining of measured information (mi) for determining its geographical position (P1..Pn) and for transmitting the measured information (mi), with the enquiries (anf) being carried out at regular or irregular intervals (t), **characterised by**
- means for calculating the position (P1..Pn) and speed of displacement (kv) of the mobile terminal (E1..En) from the transmitted measured information (mi), with the interval (t) and positional information (pi) being incorporated in the calculation of the speed of displacement, and
- means for controlling the frequency of the enquiries (anf) as a function of the determined speed of displacement (kv) of the mobile terminal (E1..En).

## Revendications

1. Procédé de localisation d'au moins un terminal mobile (E1... En),
- dans le cadre duquel diverses demandes (anf) adressées au terminal mobile (E1... En) permettent à ce dernier de déterminer à plusieurs reprises sa position géographique (P1... Pn) et de transmettre une information relative à la position (pi), sachant que les demandes (anf) sont effectuées à intervalles (t) réguliers ou irréguliers, **caractérisé**
- **en ce que** la vitesse de déplacement (kv) du terminal mobile (E1... En) est calculée à partir de l'information relative à la position (pi) transmise, sachant que l'intervalle de temps (t) et l'information relative à la position (pi) sont pris en compte dans le calcul, et
- **en ce que** la fréquence des demandes (anf) est commandée en fonction de la vitesse de déplacement (kv) déterminée du terminal mobile.

2. Procédé servant à localiser au moins un terminal mobile (E1... En),
- dans le cadre duquel diverses demandes (anf) adressées au terminal mobile (E1... En) permettent à ce dernier de déterminer à plusieurs reprises respectivement une information de mesure servant à déterminer sa position géographique (P1... Pn) et de transmettre l'information de mesure (mi), sachant que les demandes (anf) sont effectuées à des intervalles de temps (t) réguliers ou irréguliers, **caractérisé**
- **en ce que** la position (P1... Pn) du terminal mobile (E1... En) ainsi que la vitesse de déplacement (kv) du terminal mobile (E1... En) sont calculées à partir des informations de mesure (mi) transmises, sachant que l'intervalle de temps (t) et l'information relative à la position (pi) sont pris en compte dans le calcul de la vitesse de déplacement, et
- **en ce que** la fréquence des demandes (anf) est commandée en fonction de la vitesse de déplacement (kv) déterminée du terminal mobile.

3. Procédé selon la revendication 1 ou 2, **caractérisé en ce que** les demandes (anf) adressées au terminal mobile (E1... En) sont commandées par une plate-forme de communication (KF), et **en ce que** la position (P1... Pn) et/ou la vitesse de déplacement (kv) sont déterminées dans la plate-forme de communication (KF) à partir des informations de mesure ou des informations relatives à la position (pi) pour le terminal respectif (E1...En), transmises dans le cadre des demandes (anf).

4. Procédé selon l'une quelconque des revendications 1 à 3, **caractérisé en ce**
**que** la fréquence des demandes (anf) augmente dans le cas de l'augmentation de la vitesse de déplacement (kv) et est réduite dans le cas du ralentissement de la vitesse de déplacement (kv).

5. Procédé selon l'une quelconque des revendications 1 à 4, **caractérisé en ce**
**que** la fréquence des demandes (anf) est commandée en complément en fonction d'une application (AP) tenant compte de la position (P1... Pn) du terminal mobile (E1... En).

6. Procédé selon l'une quelconque des revendications précédentes, **caractérisé en ce**
**que** la position (P1... Pn) du terminal mobile (E1... En) est déterminée à l'aide d'une fonction GPS (GPS).

7. Procédé selon l'une quelconque des revendications précédentes, **caractérisé en ce**
**que** l'information de mesure (mi) est déterminée dans le terminal mobile (E1... En) grâce à la vérification du niveau d'un signal reçu par au moins un émetteur.

8. Procédé selon l'une quelconque des revendications précédentes, **caractérisé en ce**
**que** l'information de mesure (mi) est représentée par une information de réseau de communication pour les terminaux mobiles (E1... En) reliés par câble, sachant que l'information de réseau de communication indique le raccordement, auquel le terminal mobile (E1... En) est actuellement raccordé.

9. Procédé selon la revendication précédente, **caractérisé en ce**
**que** la position (P1... Pn) du terminal mobile (E1... En) est déterminée en ce qu'on constate auquel raccordement réseau, dont la position est connue, est raccordé le terminal mobile (E1... En) respectif.

10. Procédé selon la revendication précédente, **caractérisé en ce**
**que** le terminal (E1... En) est raccordé par l'intermédiaire d'un réseau de communication à une plate-forme (PF) dont la position est déterminée au moyen d'un composant de réseau de communication et l'information relative à la position (pi) formée dans le cas présent est transférée à la plate-forme (PF), et en ce que la position (P1... Pn) du terminal (E1... En) est demandée par la plate-forme (PF) pour le composant de réseau de communication.

11. Procédé selon la revendication précédente, **caractérisé en ce**
**que** le composant de réseau de communication est réalisé comme un système de transmission ou comme un gatekeeper.

12. Procédé selon l'une quelconque des revendications 8 ou 9, **caractérisé en ce**
**que** le terminal (E1... En) est raccordé directement à une plate-forme (PF), et en ce que la position (P1... Pn) du terminal (E1... En) est déterminée par la plate-forme (PF).

13. Procédé selon l'une quelconque des revendications précédentes, **caractérisé en ce**
**que** les demandes (anf) adressées aux terminaux mobiles DECT, WLAN, UMTS, ou GPRS ou PDA (E1... En) sont commandées.

14. Plate-forme de communication pour une collaboration avec des terminaux mobiles (E1... En) servant à localiser au moins un terminal mobile (E1... En),
- comportant des moyens servant à transmettre des demandes séparées (anf) au terminal mobile (E1... En) pour la détermination à plusieurs reprises de sa position géographique (P1... Pn) et servant à transmettre une information relative à la position (pi), sachant que les demandes (anf) sont effectuées à des intervalles de temps (t) réguliers ou irréguliers, **caractérisée**
- **par** des moyens servant à calculer la vitesse de déplacement (kv) à partir des informations transmises relatives à la position (pi) du terminal mobile (E1... En), sachant que l'intervalle de temps (t) et l'information relative à la position (pi) sont pris en compte dans le calcul de la vitesse de déplacement, et
- par des moyens servant à commander la fréquence des demandes (anf) en fonction de la vitesse de déplacement (kv) déterminée du terminal mobile (E1... En).

15. Plate-forme de communication pour une collaboration avec des terminaux mobiles (E1... En) servant à localiser au moins un terminal mobile (E1... En),
- comportant des moyens servant à transmettre des demandes séparées (anf) au terminal mobile (E1... En) pour la détermination à plusieurs reprises d'une information de mesure (mi) servant à déterminer sa position géographique (P1... Pn) et servant à transmettre l'information de mesure (mi), sachant que les demandes (anf) sont effectuées à des intervalles de temps (t) réguliers ou irréguliers, **caractérisée**
- **par** des moyens servant à calculer la position (P1... Pn) et la vitesse de déplacement (kv) du terminal mobile (E1... En) à partir des informations de mesure (mi) transmises, sachant que l'intervalle de temps (t) et l'information relative à la position (pi) sont pris en compte dans le calcul de la vitesse de déplacement, et
- par des moyens servant à commander la fréquence des demandes (anf) en fonction de la vitesse de déplacement (kv) déterminée du terminal mobile (E1... En).
